# EUROPÄISCHE PATENTSCHRIFT

(11) **EP 3 556 621 B1**
(45) Veröffentlichungstag und Bekanntmachung des Hinweises auf die Patenterteilung: **26.08.2020**
(21) Anmeldenummer: 19164716.3
(22) Anmeldetag: 22.03.2019
(51) Int. Cl.: B60T 15/50, G05D 16/10

(54) **DRUCKBEGRENZUNGSVENTIL**
PRESSURE LIMITATION VALVE
CLAPET DE LIMITATION DE PRESSION

(30) Priorität: 16.04.2018 DE 102018108976
(43) Veröffentlichungstag der Anmeldung: 23.10.2019
(73) Patentinhaber: WABCO Europe BVBA, 1170 Brüssel (BE)
(72) Erfinder: KROCZEK, Piotr, 49-313 Lubsza (PL)
(74) Vertreter: Rabe, Dirk-Heinrich

(56) Entgegenhaltungen:
- EP-A1- 3 301 535
- EP-A1- 3 502 824
- CH-A- 518 205
- US-A- 5 234 026
- US-A1- 2008 047 619

## Beschreibung

Die Erfindung betrifft ein Druckbegrenzungsventil, aufweisend ein Gehäuse, einen in dem Gehäuse in Richtung einer Gehäuselängsachse zwischen einer Füllstellung, einer Druckbegrenzungsstellung und einer Entlüftungsstellung verstellbaren Schaltkolben, ein vom Schaltkolben betätigbares, bei der Entlüftungsstellung des Schaltkolbens einen Entlüftungskanal freigebendes, federbelastetes Folgeventil, eine den Schaltkolben in Richtung zu seiner Füllstellung hin belastende Schaltfeder, ein Einstellschraubmittel zum Vorspannen der Schaltfeder, und eine einen Kolben des Folgeventils zur Anlage am Schaltkolben hin vorspannende Spannfeder.

Druckbegrenzungsventile dienen dazu, in einem Druckmittelsystem, beispielsweise einem Druckluftsystem eines Fahrzeugs, einen vorgegebenen Betriebsdruck aufrechtzuerhalten. Sie sind demnach jeweils zwischen einer Druckmittelquelle, die einen über dem gewünschten Betriebsdruck liegenden Druck zur Verfügung stellt, und den Druckluftverbrauchern im Druckluftsystem angeordnet. Ein typisches Anwendungsgebiet für derartige Druckbegrenzungsventile sind Druckluftsysteme für Fahrzeugbremsanlagen.

Ein Beispiel des Standes der Technik nach Artikel 54(3) EPÜ ist in EP 3 502 824 A1 dargestellt.

Die Funktionsweise von Druckbegrenzungsventilen der genannten Art ist wie folgt: Eine Druckmittelquelle liefert ein Druckmittel, welches über einen Einlassstutzen des Druckbegrenzungsventils einer im Gehäuse ausgebildeten Verbindungskammer zugeführt wird. Wenn der federbelastete Stellkolben dabei in seiner unteren Betätigungsstellung an einen mechanischen Anschlag des Gehäuses anliegt, dann ist ein Kolben des Folgeventils von dessen Ventilsitz weggedrückt und so eine festgelegte Füllstellung des Druckbegrenzungsventils erreicht. Bei dieser Füllstellung ist eine Fluidverbindung von dem Einlassstutzen zu der Verbindungskammer freigegeben ist, welche über einen Auslassstutzen am Gehäuse mit dem Druckmittelsystem beziehungsweise mit zumindest einem seiner Druckluftverbraucher verbunden ist. Sobald der Druck in der Verbindungskammer und damit im Druckmittelsystem den vorgegebenen Betriebsdruck erreicht, wird der vom Druckmittel beaufschlagte Schaltkolben durch den Kolben des Folgeventils gegen die Kraft der auf den vorgegebenen Betriebsdruck abgestimmten Schaltfeder in eine sogenannte Druckbegrenzungsstellung verstellt, bei der die Verbindung zwischen Einlassstutzen und Auslassstutzen gesperrt ist. Wenn der Betriebsdruck infolge Druckmittelverbrauchs unter den Solldruck absinkt, wird diese Verbindung wieder freigegeben, bis der Solldruck wieder erreicht ist und so fort.

Wenn aus betrieblichen Gründen der Betriebsdruck über den Solldruck ansteigt, wird der Schaltkolben axial noch weiter von dem mechanischen Anschlag des Gehäuses weg in eine Entlüftungsstellung geschoben, bei der das vom Schaltkolben gesteuerte Folgeventil einen Strömungsweg zu einem zentral in diesem ausgebildeten Entlüftungskanal freigibt, wobei der Druck im Druckmittelsystem stromab hinter dem Druckbegrenzungsventil wieder abfällt und der Schaltkolben in seine Druckbegrenzungsstellung am mechanischen Anschlag des Gehäuses zurückkehrt.

Aus der DE 43 44 416 A1 ist ein Druckbegrenzungsventil bekannt, welches nach dem gerade beschriebenen Prinzip arbeitet. Dabei wird die Schaltfeder mittels einer im Boden des Gehäuses verstellbar angeordnete Einstellschraube unter Zwischenschaltung einer Übertragungsglocke vorgespannt, wobei die Einstellschraube am Boden der Glocke anliegt und die Schaltfeder sich auf einem Randflansch der Glocke abstützt. Es hat sich gezeigt, dass infolge geringer konstruktiver Steifigkeit dieser Anordnung sich die Federcharakteristik und als Ergebnis davon der Betriebsdruck im System unkontrolliert verändern können.

Um ein solches Druckbegrenzungsventil montieren zu können, ist dessen Gehäuse in seiner Serienausführungsform gemäß dem Druckbegrenzungsventil WABCO 475 010 302 zweiteilig ausgeführt, wobei nach dem Einführen der Funktionselemente in ein erstes Gehäuseteil das zweite Gehäuseteil mit dem ersten verschraubt werden muss. Das bekannte Druckbegrenzungsventil ist deshalb herstellungs- und montagetechnisch vergleichsweise aufwendig und teuer.

Vor diesem Hintergrund liegt der Erfindung die Aufgabe zugrunde, ein Druckbegrenzungsventil der im Oberbegriff des Anspruchs 1 genannten Art zu schaffen, welches herstellungs- sowie montagetechnisch einfacher und damit preiswerter ist als bekannte gattungsgemäße Druckbegrenzungsventile, und bei welchem Abweichungen vom vorgegebenen Solldruck infolge fehlender konstruktiver Steifigkeit ausgeschlossen sind.

Die Lösung dieser Aufgabe wird durch ein Druckbegrenzungsventil mit den Merkmalen des Anspruchs 1 erreicht, während vorteilhafte Ausgestaltungen und Weiterbildungen der Erfindung den Unteransprüchen entnehmbar sind.

Demnach geht die Erfindung aus von einem Druckbegrenzungsventil, aufweisend ein Gehäuse, einen in dem Gehäuse in Richtung einer Gehäuselängsachse zwischen einer Füllstellung, einer Druckbegrenzungsstellung und einer Entlüftungsstellung verstellbaren Schaltkolben, ein vom Schaltkolben betätigbares, bei der Entlüftungsstellung des Schaltkolbens einen Entlüftungskanal freigebendes, federbelastetes Folgeventil, eine den Schaltkolben in Richtung zu seiner Füllstellung hin belastende Schaltfeder, ein Einstellschraubmittel zum Vorspannen der Schaltfeder, und eine einen Kolben des Folgeventils zur Anlage am Schaltkolben hin vorspannende Spannfeder.

Zur Lösung der gestellten Aufgabe ist dabei vorgesehen, dass das Gehäuse einstückig ausgebildet ist und weitgehend die Geometrie eines an beiden Enden offenen Rohrkörpers aufweist, dass das vorspannende Einstellschraubmittel als ein in ein axiales Ende des Gehäuses einschraubbarer, eine Anlagefläche für das zugeordnete Ende der Schaltfeder aufweisender Schraubdeckel ausgebildet ist, und dass die Spannfeder mittels einer in das andere, schraubdeckelferne Ende des Gehäuses einsetzbaren Einsatzbuchse axial vorgespannt ist.

Die Geometrie des Gehäuses als ein an seinen beiden Enden offener Rohrkörper ermöglicht es, den Schaltkolben mit dem gesamten, diesen in seine Füllstellung vorspannenden System von einer ersten Gehäuseseite her, und das Folgeventil mit seinem dieses in der entgegengesetzten Richtung vorspannenden System von der zweiten Gehäuseseite her einzubauen, wobei der die Schaltfeder für den Schaltkolben vorspannende Schraubdeckel einerseits und die die Spannfeder für das Folgeventil vorspannende Einsatzbuchse andererseits die jeweils zugeordneten Enden des Gehäuses verschließen.

Der die Schaltfeder jeweils entsprechend dem vorgegebenen Betriebsdruck (Solldruck) spannende Schraubdeckel bildet ohne Umweg über andere Bauelemente direkt eine axiale Anlagefläche für die Schaltfeder, so dass insoweit die Konstruktion vereinfacht und aufgrund einer stabilen Abstützung der Schaltfeder am Schraubdeckel ihre sichere Funktion gewährleistet sind. Die Notwendigkeit, zwei Gehäuseteile miteinander zu verschrauben entfällt, so dass die Montage des Druckbegrenzungsventils vereinfacht wird.

Erfindungsgemäß ist die Einsatzbuchse mittels eines Bajonettverschlusses im Gehäuse befestigt i. Das Einsetzen der Einsatzbuchse in das Gehäuse ist auf diese Weise einfach und mit äußerst geringem Zeitaufwand durchführbar.

Eine vorteilhafte Ausgestaltung sieht vor, dass einerseits an der Einsatzbuchse und andererseits an dem Gehäuse zusammenwirkende, im montierten Zustand der Einsatzbuchse einrastende Verdrehsicherungsmittel ausgebildet sind. Hierdurch ist ein selbsttätiges Lösen der Einsatzbuchse beispielsweise unter mit Erschütterungen verbundenen Betriebsbedingungen ausgeschlossen.

Um eine verkantungsfreie Führung des Folgeventils bei einer Bewegung des Schaltkolbens zu gewährleisten, ist gemäß einer weiteren Ausgestaltung des Druckbegrenzungsventils vorgesehen, dass an der Einsatzbuchse ein sich in Richtung zur axialen Mitte des Gehäuses hin erstreckender, die Spannfeder aufnehmender erster, radial äußerer Rohrstutzen ausgebildet ist, und dass der Kolben des Folgeventils die Form einer zum radial äußeren Rohrstutzen hin offenen, über dessen axial inneres Ende gestülpten Ringnut hat. Der Kolben des Folgeventils beziehungsweise dessen radial äußere Ringnutwand wird dabei etwa teleskopartig am axial inneren Ende des radial äußeren Rohrstutzens der Einsatzbuchse geführt.

Gemäß einer anderen Weiterbildung der Erfindung ist vorgesehen, dass an der Einsatzbuchse ein radial innerhalb des ersten Rohrstutzens angeordneter und zu diesem konzentrischer zweiter Rohrstutzen angeordnet ist, welcher an seinen beiden axialen Enden offen ist und mit seinem axial inneren Ende eine zentrale Öffnung im Kolben des Folgeventils axial durchsetzt. Der zweite Rohrstutzen dient hierbei als Entlüftungskanal, das heißt, dass die Entlüftung hier nicht über den beweglichen Kolben sondern über die feststehende Einsatzbuchse erfolgt. Wenn der Schaltkolben seine Entlüftungsstellung einnimmt, gibt er das axial innere Ende dieses zweiten, radial inneren Rohrstutzens frei, welches dann mit der Verbindungskammer in Verbindung steht. Dadurch kann sich ein Überdruck in der Verbindungskammer und damit im Druckluftsystem über den an beiden Enden offenen Entlüftungskanal des inneren Rohrstutzens zur Atmosphäre hin abbauen, wie anhand eines Ausführungsbeispiels noch im Einzelnen beschrieben wird.

Um ein Eindringen von Außenluft und gegebenenfalls Verschmutzungen durch den Entlüftungskanal in das Druckbegrenzungsventil auszuschließen, ist erfindungsgemäß vorgesehen, dass das nach axial außen weisende offene Ende des zweiten, radial inneren Rohrstutzens der Einsatzbuchse durch eine nach außen aufschwenkbare elastische Ventilklappe abgedeckt ist, welche mittels am Rohrstutzen ausgebildeter Befestigungsmittel an diesem gehalten ist. Diese Ventilklappe verschließt den Weg von außen nach innen, sie öffnet jedoch beim Entlüftungsvorgang.

Um einen Druckausgleich zwischen den Kolbenseiten des Schaltkolbens, also der Kolbenunterseite und der Kolbenoberseite bei einer Kolbenbewegung zu ermöglichen, ist der Schaltkolben von einer die beiden Kolbenseiten verbindenden Ausgleichsöffnung durchsetzt.

Eine konstruktive Ausgestaltung des erfindungsgemäßen Druckbegrenzungsventils sieht vor, dass eine im Gehäuse ausgebildete Verbindungskammer jeweils direkt mit dem zugeordneten, am Gehäuse integral ausgebildeten Einlassstutzen und Auslassstutzen in Verbindung steht. Über den Einlassstutzen ist das Druckbegrenzungsventil mittels geeigneter Druckmittelleitungen mit der Druckmittelquelle, und über den Auslassstutzen mit dem Druckmittelsystem beziehungsweise mit dessen Druckluftverbraucher verbunden.

Eine bevorzugte Ausgestaltung der Erfindung sieht vor, dass die Einsatzbuchse aus einem Kunststoffmaterial hergestellt ist. Sie stellt damit trotz ihres komplexen Aufbaus mit den Bajonettverschlussmitteln sowie mit dem inneren und äußeren Rohrstutzen ein herstellungstechnisch einfaches sowie kostengünstiges Bauteil dar, welches sich zudem leicht montieren lässt.

Schließlich kann vorgesehen sein, dass der Schraubdeckel aus einem Kunststoff besteht, wodurch dieser leichtgewichtig sowie kostengünstig herstellbar ist.

Die Erfindung wird nachfolgend anhand eines Ausführungsbeispiels weiter erläutert. Dazu ist der Beschreibung eine Zeichnung beigefügt. In dieser zeigt
Fig. 1 einen Längsschnitt durch ein erfindungsgemäßes Druckbegrenzungsventil mit einem Gehäuse, einem federbelasteten Schaltkolben, einem federbelasteten Folgeventil, und einer Einsatzbuchse zum Vorspannen einer Feder des Folgeventils,
Fig. 2 eine perspektivische Darstellung der Einsatzbuchse gemäß Fig. 1 zusammen mit einer elastischen Ventilklappe, und
Fig. 3 eine axiale Draufsicht auf die schaltkolbenferne Seite der Einsatzbuchse gemäß Fig. 2.

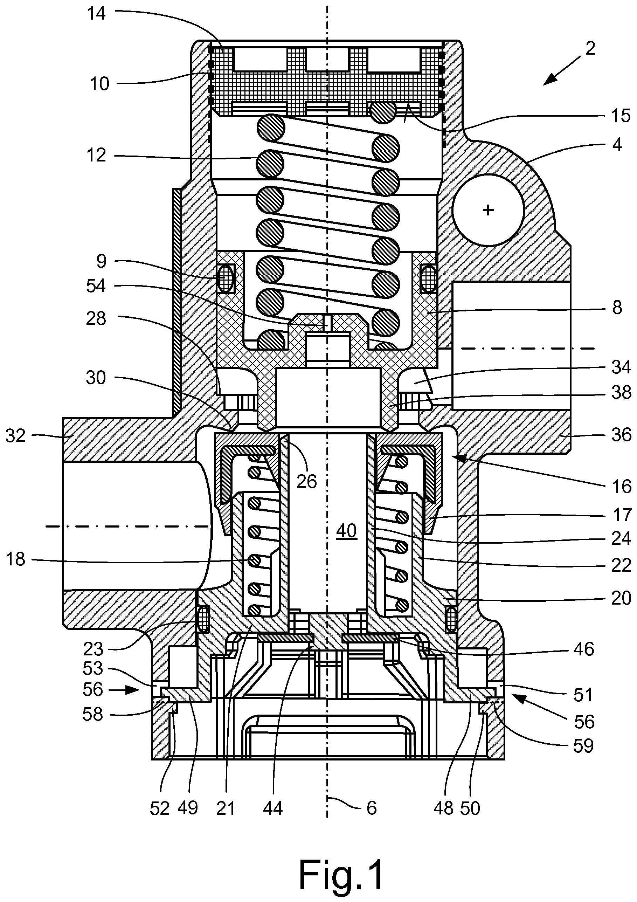

Das in Fig. 1 dargestellte Druckbegrenzungsventil 2 weist zunächst ein Gehäuse 4 in der Form eines an seinen beiden axialen Enden offenen Rohrkörpers, einen in dem Gehäuse 4 in Richtung der Gehäuselängsachse 6 verstellbar angeordneten Schaltkolben 8, und eine den Schaltkolben 8 in Richtung nach axial innen in das Gehäuse 4 belastende Schaltfeder 12. Die Schaltfeder 12 stützt sich mit ihrem oberen axialen Ende an einer Anlagefläche 15 eines Schraubdeckels 14 ab, welcher mittels eines abgedichteten Schraubgewindes 10 in das obere Ende des Gehäuses 4 eingeschraubt ist. Durch unterschiedlich tiefes Einschrauben des Schraubdeckels 14 in das Gehäuse 4 wird die axiale Vorspannung der Schaltfeder 12 eingestellt.

Ferner ist ein mit dem Schaltkolben 8 zusammenwirkendes Folgeventil 16 in dem im Wesentlichen zylindrischen Hohlraum des Gehäuses 4 angeordnet, dessen Kolben 17 mittels einer Spannfeder 18 in Richtung zur axialen Mitte des Gehäuses 4 vorgespannt ist. Die Spannfeder 18 ist mittels einer in das untere Ende des Gehäuses 4 eingesetzten Einsatzbuchse 20 axial vorgespannt. Die Einsatzbuchse 20 ist vorzugsweise aus einem Kunststoffmaterial hergestellt, und sie wird mittels eines Bajonettverschlusses 56 im Gehäuse 4 gehalten, wie noch im Einzelnen dargelegt wird. Die Schaltfeder 12 und die Spannfeder 18 sind erkennbar als Schraubendruckfedern mit unterschiedlichen Federkraftwirkungen ausgebildet.

Die Einsatzbuchse 20 weist einen Boden 21 auf, an dem ein erster, zur Gehäuselängsachse 6 konzentrischer radial äußerer Rohrstutzen 22 ausgebildet ist, in dessen zylindrischen Hohlraum die Spannfeder 18 aufgenommen ist. Der Kolben 17 des Folgeventils 16 hat die Form einer zu dem radial äußeren Rohrstutzen 22 hin offenen, über das axial innere Ende 26 des äußeren Rohrstutzens 22 gestülpten Ringnut. Der Kolben 17 beziehungsweise seine radial äußere Ringnutwand ist dabei koaxial zur Gehäuselängsachse 6 auf dem radial äußeren Rohrstutzen 22 teleskopartig und verkantungssicher geführt.

An der Einsatzbuchse 20 ist ein zweiter, radial innerhalb des ersten Rohrstutzens 22 angeordneter und zu diesem konzentrisch angeordneter Rohrstutzen 24 ausgebildet, welcher an seinen beiden axialen Enden im Wesentlichen offen ist, und dessen axial inneres Ende 26 eine zentrale Öffnung im Kolben 17 des Folgeventil 16 axial durchsetzt, so dass dieser Kolben 17 an dem radial inneren Rohrstutzen 24 zusätzlich geführt wird.

Der Schaltkolben 8 kann in an sich bekannter Weise in einer nicht dargestellten, an einem axialen Anschlag 28 des Gehäuses 4 anliegenden Füllstellung positioniert sein, bei welcher der Kolben 17 des Folgeventils 16 von einem zugeordneten axialen Dichtsitz 30 am Gehäuse 4 abgehoben ist und dadurch einen Strömungsweg von einem Einlassstutzen 32 des Gehäuses 4 über eine im Gehäuse 4 ausgebildete Verbindungskammer 34 zu einem Auslassstutzen 36 des Gehäuses 4 freigibt.

Ferner kann der Schaltkolben 8 in der in Fig. 1 dargestellten Druckbegrenzungsstellung positioniert sein, bei welcher der Kolben 17 des Folgeventils 16 am Dichtsitz 30 des Gehäuses 4 axial anliegt und den Strömungsweg vom Einlassstutzen 32 zum Auslassstutzen 36 absperrt.

Schließlich kann der Schaltkolben 8 in einer nicht dargestellten oberen, schraubdeckelnahen Entlüftungsstellung verschobenen sein, bei welcher ein am Schaltkolben 8 radial innen und axial innen ausgebildeter zentraler, rohrförmiger Stutzen 38 vom Kolben 17 des Folgeventils 16 axial abgehoben ist und damit einen Strömungsweg von der Verbindungskammer 34 zu dem vom radial inneren Rohrstutzen 24 des Folgeventils 16 gebildeten Entlüftungskanal 40 freigibt. Der radial innere Rohrstutzen 24 des Folgeventils 16 ist über sein unteres offenes Ende zur Atmosphäre hin geöffnet, so dass Druckluft nach dorthin abgeblasen werden kann.

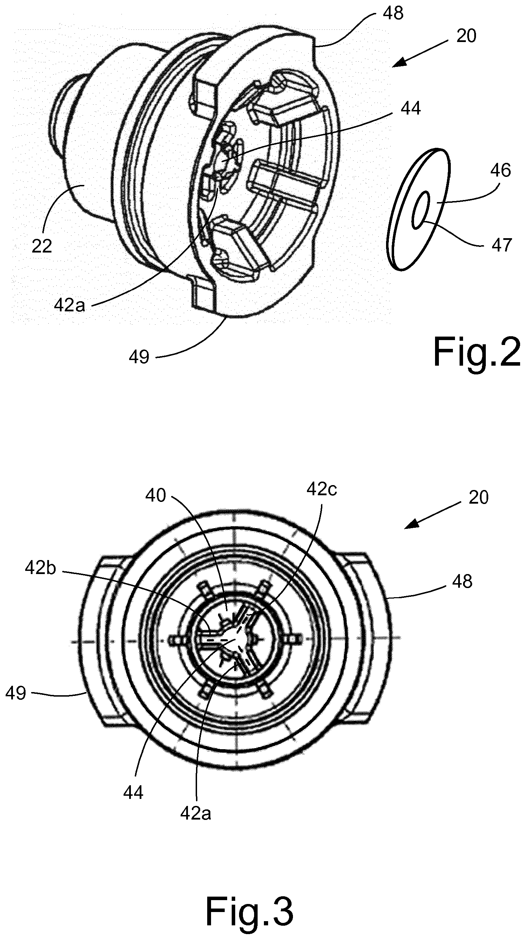

Wie die Figuren 1 bis 3 zeigen, weist der Boden 21 der Einsatzbuchse 20 in axialer Verlängerung des Entlüftungskanals 40 eine zentrale Öffnung auf, über die sich drei Haltearme 42a, 42b, 42c erstrecken. Die drei Haltearme 42a, 42b, 42c sind mittig in der Öffnung des Bodens 21 der Einsatzbuchse 20 miteinander verbunden und bilden dort ein Befestigungselement 44, auf welches eine elastische Ventilklappe 46 mittels deren zentrale Bohrung 47 aufgeclipst ist, welche das Eintreten von Wasser und von Verschmutzungen in den Entlüftungskanal 40 verhindert, ein Austreten von Luft während des Entlüftungsvorgangs jedoch nicht behindert. Fig. 3 zeigt die Einsatzbuchse 20 ohne die Ventilklappe 46, in Fig. 2 ist die elastische Ventilklappe 46 vor deren Montage dicht an der Einsatzbuchse 20 dargestellt, und Fig. 1 zeigt die Ventilklappe 46 im montierten Zustand.

Die in den Figuren 1 bis 3 dargestellte Einsatzbuchse 20 weist an ihrem axial unteren, schaltkolbenfernen Ende zwei radial abstehende Verbindungsflansche 48, 49 auf, die mit zugeordneten, am unteren axialen Ende des Gehäuses 4 ausgebildeten Innenflanschsegmenten 50, 52 zusammenwirken und den erwähnten Bajonettverschluss 56 bilden. Zur Montage der Einsatzbuchse 20 wird diese gegen die Kraft der Spannfeder 18 in das Gehäuse 4 axial eingeführt und sodann um deren Längsachse gedreht, wobei die Außenflanschsegmente 48, 49 der Einsatzbuchse 20 hinter die zugeordneten Innenflanschsegmente 50, 52 des Gehäuses 4 greifen. Wenn die korrekte Drehstellung erreicht ist, sind die Außenflanschsegmente 48, 49 radial außen in jeweils einer kreissegmentförmigen Verrastungsöffnung 51, 53 des Gehäuses 4 angeordnet. Sie liegen dabei in axialen Aussparungen 58, 59 der Verrastungsöffnungen 51, 53, in die sie durch die auf die Einsatzbuchse 20 rückwirkende Spannfeder 18 gedrückt werden, so dass die Einsatzbuchse 20 über diese Verdrehsicherungsmittel verdrehgesichert im Gehäuse 4 gehalten ist.

Im Schaltkolben 8 ist eine zentrale, die beiden Kolbenseiten miteinander verbindende Ausgleichsöffnung 54 ausgebildet, mittels der ein Druckausgleich zwischen dem oberen und dem unteren Zylinderraum des Gehäuses 4 bei einer Schaltbewegung des Schaltkolbens möglich ist. Zudem sind der Stellkolben 8 und die Einsatzbuchse 20 mittels jeweils eines Dichtringes 9, 23 gegenüber dem Gehäuse 4 angedichtet.

### Bezugszeichenliste (Teil der Beschreibung)

- 2: Druckbegrenzungsventil
- 4: Gehäuse
- 6: Gehäuselängsachse
- 8: Schaltkolben
- 9: Erster Dichtring
- 10: Gewinde
- 12: Schaltfeder
- 14: Schraubdeckel aus Kunststoff
- 15: Anlagefläche am Schaubdeckel
- 16: Folgeventil
- 17: Kolben des Folgeventils
- 18: Spannfeder
- 20: Einsatzbuchse
- 22: Radial äußerer Rohrstutzen der Einsatzbuchse
- 23: Zweiter Dichtring
- 24: Radial innerer Rohrstutzen der Einsatzbuchse
- 26: Axial inneres Ende des radial inneren Rohrstutzens der Einsatzbuchse
- 28: Anschlag am Gehäuse
- 30: Dichtsitz am Folgeventil
- 32: Einlassstutzen am Gehäuse
- 34: Verbindungskammer im Gehäuse
- 36: Auslassstutzen am Gehäuse
- 38: Zentraler Stutzen des Schaltkolbens
- 40: Entlüftungskanal
- 42a: Erster Haltearm an der Einsatzbuchse
- 42b: Zweiter Haltearm an der Einsatzbuchse
- 42c: Dritter Haltearm an der Einsatzbuchse
- 44: Zentrales Befestigungselement an der Einsatzbuchse
- 46: Elastische Ventilklappe
- 47: Zentrale Bohrung in der Ventilkrappe
- 48: Erster Verbindungsflansch der Einsatzbuchse
- 49: Zweiter Verbindungsflansch der Einsatzbuchse
- 50: Erstes Innenflanschsegment am Gehäuse
- 51: Erste Verrastungsöffnung
- 52: Zweites Innenflanschsegment am Gehäuse
- 53: Zweite Verrastungsöffnung
- 54: Ausgleichsöffnung im Schaltkolben
- 56: Bajonettverschluss
- 58: Erste Aussparung eines Verdrehsicherungsmittels am Gehäuse
- 59: Zweite Aussparung eines Verdrehsicherungsmittels am Gehäuse

## Patentansprüche

1. Druckbegrenzungsventil (2), aufweisend ein Gehäuse (4), einen in dem Gehäuse (4) in Richtung einer Gehäuselängsachse (6) zwischen einer Füllstellung, einer Druckbegrenzungsstellung und einer Entlüftungsstellung verstellbaren Schaltkolben (8), ein vom Schaltkolben (8) betätigbares, bei der Entlüftungsstellung des Schaltkolbens (8) einen Entlüftungskanal (40) freigebendes, federbelastetes Folgeventil (16), eine den Schaltkolben (8) in Richtung zu seiner Füllstellung hin belastende Schaltfeder (12), ein Einstellschraubmittel zum Vorspannen der Schaltfeder (12), und eine einen Kolben (17) des Folgeventils (16) zur Anlage am Schaltkolben (8) hin vorspannende Spannfeder (18), wobei das Gehäuse (4) einstückig ausgebildet ist und weitgehend die Geometrie eines an beiden Enden offenen Rohrkörpers aufweist, wobei das vorspannende Einstellschraubmittel als ein in ein axiales Ende des Gehäuses (4) einschraubbarer, eine Anlagefläche (15) für das zugeordnete Ende der Schaltfeder (12) aufweisender Schraubdeckel (14) ausgebildet ist, wobei die Spannfeder (18) mittels einer in das andere, schraubdeckelferne Ende des Gehäuses (4) einsetzbaren Einsatzbuchse (20) axial vorgespannt ist, und **dadurch gekennzeichnet, dass** die Einsatzbuchse (20) mittels eines Bajonettverschlusses (56) im Gehäuse (4) befestigt ist.

2. Druckbegrenzungsventil nach Anspruch 1, **dadurch gekennzeichnet, dass** an der Einsatzbuchse (20) einerseits und dem Gehäuse (4) andererseits zusammenwirkende, im montierten Zustand der Einsatzbuchse (20) einrastende Verdrehsicherungsmittel (58, 59) ausgebildet sind.

3. Druckbegrenzungsventil nach einem der Ansprüche 1 und 2, **dadurch gekennzeichnet, dass** an der Einsatzbuchse (20) ein in Richtung zum Inneren des Gehäuses (4) hin sich erstreckender, die Spannfeder (18) aufnehmender erster, radial äußerer Rohrstutzen (22) ausgebildet ist, und dass der Kolben (17) des Folgeventils (16) die Form einer zum radial äußeren Rohrstutzen (22) hin offenen, über dessen axial inneres Ende gestülpten Ringnut hat.

4. Druckbegrenzungsventil nach Anspruch 3, **dadurch gekennzeichnet, dass** an der Einsatzbuchse (20) ein zweiter, radial innerhalb des ersten Rohrstutzens (22) angeordneter und zu diesem konzentrischer zweiter Rohrstutzen (24) angeordnet ist, welcher an seinen beiden axialen Enden offen ist und mit seinem axial inneren Ende (26) eine zentrale Öffnung im Kolben (17) des Folgeventils (16) axial durchsetzt.

5. Druckbegrenzungsventil nach Anspruch 4, **dadurch gekennzeichnet, dass** das nach axial außen weisende offene Ende des radial inneren Rohrstutzens (24) der Einsatzbuchse (20) durch eine nach axial außen aufschwenkbare elastische Ventilklappe (46) abgedeckt ist, welche mittels am radial inneren Rohrstutzen (24) ausgebildeten Befestigungsmitteln (42a, 42b, 42c) an diesem gehalten ist.

6. Druckbegrenzungsventil nach einem der Ansprüche 1 bis 5, **dadurch gekennzeichnet, dass** der Schaltkolben (8) von einer die beiden Kolbenseiten verbindenden Ausgleichsöffnung (54) durchsetzt ist.

7. Druckbegrenzungsventil nach einem der Ansprüche 1 bis 6, **dadurch gekennzeichnet, dass** eine im Gehäuse (4) ausgebildete Verbindungskammer (34) jeweils direkt mit dem zugeordneten, am Gehäuse (4) integral ausgebildeten Einlassstutzen (32) und Auslassstutzen (36) in Verbindung steht.

8. Druckbegrenzungsventil nach einem der Ansprüche 1 bis 7, **dadurch gekennzeichnet, dass** die Einsatzbuchse (20) aus einem Kunststoffmaterial besteht.

9. Druckbegrenzungsventil nach einem der Ansprüche 1 bis 8, **dadurch gekennzeichnet, dass** der Schraubdeckel (14) aus einem Kunststoff besteht.

## Claims

1. Pressure-limiting valve (2) having a housing (4), having a switching piston (8) which is adjustable in the housing (4) in the direction of a housing longitudinal axis (6) between a filling position, a pressure-limiting position and a venting position, having a spring-loaded sequence valve (16) which is able to be actuated by the switching piston (8) and, with the switching piston (8) in the venting position, opens up a venting duct (40), having a switching spring (12) which loads the switching piston (8) in the direction of its filling position, having a setting screw means for preloading the switching spring (12), and having a tensioning spring (18) which preloads a piston (17) of the sequence valve (16) for abutment against the switching piston (8), wherein the housing (4) is formed in one piece and has largely the geometry of a tube body which is open at both ends, wherein the preloading setting screw means is in the form of a screw cover (14) which is able to be screwed into an axial end of the housing (4) and which has an abutment surface (15) for the associated end of the switching spring (12), wherein the tensioning spring (18) is axially preloaded by means of an insert bushing (20) which is able to be inserted into the other, screw cover-remote end of the housing (4), and **characterized in that** the insert bushing (20) is fastened by means of a bayonet fastener (56) in the housing (4).

2. Pressure-limiting valve according to Claim 1, **characterized in that**, on the insert bushing (20) on the one hand and on the housing (4) on the other hand, there are formed interacting relative-rotation prevention means (58, 59), which latch in in the fitted state of the insert bushing (20).

3. Pressure-limiting valve according to either of Claims 1 and 2, **characterized in that**, on the insert bushing (20), there is formed a first, radially outer tube connecting piece (22), which extends in the direction of the interior of the housing (4) and accommodates the tensioning spring (18), and **in that** the piston (17) of the sequence valve (16) has the form of an annular groove which is open towards the radially outer tube connecting piece (22) and which is fitted over the axial inner end thereof.

4. Pressure-limiting valve according to Claim 3, **characterized in that**, on the insert bushing (20), there is arranged a second tube connecting piece (24), which is arranged radially within the first tube connecting piece (22) and is concentric therewith and is open at its two axial ends and, with its axial inner end (26), axially passes through a central opening in the piston (17) of the sequence valve (16).

5. Pressure-limiting valve according to Claim 4, **characterized in that** the axially outwardly pointing open end of the radially inner tube connecting piece (24) of the insert bushing (20) is covered by an elastic valve flap (46) which is able to be pivoted open axially outwardly and which, by means of fastening means (42a, 42b, 42c) formed on the radially inner tube connecting piece (24), is held on the latter.

6. Pressure-limiting valve according to one of Claims 1 to 5, **characterized in that** the switching piston (8) is passed through by a compensation opening (54), which connects the two piston sides.

7. Pressure-limiting valve according to one of Claims 1 to 6, **characterized in that** a connection chamber (34) formed in the housing (4) is connected in each case directly to the associated inlet connecting piece (32) and outlet connecting piece (36), which are formed integrally on the housing (4).

8. Pressure-limiting valve according to one of Claims 1 to 7, **characterized in that** the insert bushing (20) consists of a plastic material.

9. Pressure-limiting valve according to one of Claims 1 to 8, **characterized in that** the screw cover (14) consists of a plastic.

## Revendications

1. Valve de limitation de pression (2), présentant un boîtier (4), un piston de commutation (8) déplaçable dans le boîtier (4) dans la direction d'un axe longitudinal du boîtier (6) entre une position de remplissage, une position de limitation de pression et une position de désaérage, une valve de séquence (16) sollicitée par ressort, pouvant être actionnée par le piston de commutation (8), libérant un canal de désaérage (40) dans la position de désaérage du piston de commutation (8), un ressort de commutation (12) sollicitant le piston de commutation (8) dans la direction de sa position de remplissage, un moyen de vissage d'ajustement pour précontraindre le ressort de commutation (12) et un ressort de tensionnement (18) précontraignant un piston (17) de la valve de séquence (16) en direction d'une application contre le piston de commutation (8), le boîtier (4) étant réalisé d'une seule pièce et présentant essentiellement la géométrie d'un corps tubulaire ouvert aux deux extrémités, le moyen de vissage d'ajustement précontraignant étant réalisé sous la forme d'un couvercle vissable (14) pouvant être vissé dans une extrémité axiale du boîtier (4), présentant une surface d'appui (15) pour l'extrémité associée du ressort de commutation (12), le ressort de tensionnement (18) étant précontraint axialement au moyen d'une douille d'insertion (20) pouvant être insérée dans l'autre extrémité du boîtier (4) éloignée du couvercle vissable, **caractérisée en ce que** la douille d'insertion (20) est fixée dans le boîtier (4) au moyen d'une fermeture à baïonnette (56).

2. Valve de limitation de pression selon la revendication 1, **caractérisée en ce que** des moyens antirotation (58, 59) coopérants, s'encliquetant dans l'état monté de la douille d'insertion (20), sont réalisés d'une part au niveau de la douille d'insertion (20) et d'autre part au niveau du boîtier (4).

3. Valve de limitation de pression selon l'une quelconque des revendications 1 et 2, **caractérisée en ce qu'**une première tubulure radialement extérieure (22) recevant le ressort de tensionnement (18), s'étendant dans la direction de l'intérieur du boîtier (4), est réalisée au niveau de la douille d'insertion (20), et **en ce que** le piston (17) de la valve de séquence (16) présente la forme d'une rainure annulaire, ouverte vers la tubulure radialement extérieure (22) et rabattue par-dessus son extrémité axiale intérieure.

4. Valve de limitation de pression selon la revendication 3, **caractérisée en ce qu'**une deuxième tubulure (24), disposée radialement à l'intérieur de la première tubulure (22) et concentrique par rapport à celle-ci, est disposée au niveau de la douille d'insertion (20), laquelle est ouverte au niveau de ses deux extrémités axiales et traverse axialement, avec son extrémité axialement intérieure (26), une ouverture centrale dans le piston (17) de la valve de séquence (16) .

5. Valve de limitation de pression selon la revendication 4, **caractérisée en ce que** l'extrémité ouverte tournée axialement vers l'extérieur de la tubulure radialement intérieure (24) de la douille d'insertion (20) est recouverte par un clapet de valve élastique (46) pouvant pivoter axialement vers l'extérieur, qui est retenu, au moyen de moyens de fixation (42a, 42b, 42c) réalisés au niveau de la tubulure radialement intérieure (24), contre cette dernière.

6. Valve de limitation de pression selon l'une quelconque des revendications 1 à 5, **caractérisée en ce que** le piston de commutation (8) est traversé par une ouverture d'équilibrage (54) reliant les deux côtés du piston.

7. Valve de limitation de pression selon l'une quelconque des revendications 1 à 6, **caractérisée en ce qu'**une chambre de liaison (34) réalisée dans le boîtier (4) est à chaque fois en liaison directe avec la tubulure d'entrée (32) et la tubulure de sortie (36) associées réalisées intégralement sur le boîtier (4).

8. Valve de limitation de pression selon l'une quelconque des revendications 1 à 7, **caractérisée en ce que** la douille d'insertion (20) se compose d'un matériau en plastique.

9. Valve de limitation de pression selon l'une quelconque des revendications 1 à 8, **caractérisée en ce que** le couvercle vissable (14) se compose d'un plastique.
